**Europäisches Patentamt**

**European Patent Office**

**Office européen des brevets**

(11) Publication number: **0 218 27:**

**B1**

(12) **EUROPEAN PATENT SPECIFICATION**

(45) Date of publication of patent specification: **27.06.90**

(51) Int. Cl.⁵: **G 01 C 21/00**

(21) Application number: **86201454.5**

(22) Date of filing: **22.08.86**

(54) **Land vehicle navigation device comprising a filter unit for determining an optimum heading from presented orientation signals, and filter unit to be used in said navigation device.**

(30) Priority: **28.08.85 NL 8502361**
**30.07.86 NL 8601952**

(43) Date of publication of application:
**15.04.87 Bulletin 87/16**

(45) Publication of the grant of the patent:
**27.06.90 Bulletin 90/26**

(84) Designated Contracting States:
**DE FR GB IT**

(56) References cited:
**US-A-3 630 079**
**US-A-3 844 051**
**US-A-4 106 094**

(73) Proprietor: **N.V. Philips' Gloeilampenfabrieken**
**Groenewoudseweg 1**
**NL-5621 BA Eindhoven (NL)**

(72) Inventor: **Thoone, Martinus Leonardus**
**Gerardus**
**c/o INT. OCTROOIBUREAU B.V. Prof. Holstlaan (**
**NI-5656 AA Eindhoven (NL)**
Inventor: **Krukkert, Henricus Paulus Maria**
**c/o INT. OCTROOIBUREAU B.V. Prof. Holstlaan (**
**NI-5656 AA Eindhoven (NL)**

(74) Representative: **Strijland, Wilfred et al**
**INTERNATIONAAL OCTROOIBUREAU B.V. Prof.**
**Holstlaan 6**
**NL-5656 AA Eindhoven (NL)**

Courier Press, Leamington Spa, England.

# EP 0 218 273 B1

**Description**

The invention relates to a navigation device for a vehicle comprising a compass for recording the orientation of the vehicle and suitable to form first orientation signal by regular sampling of the recorded orientation, a measuring unit to determine the variations in the orientation of the vehicle and suitable to form second orientation signals from regularly recorded samples of the said variations of the orientation, a digital unit which is suitable to process received first and second orientation signals and, which comprises an output unit.

Such a navigation system is known for a vessel from United States Patent Specification No. 3,630,079. In the known navigation system the orientation signals are combined to determine therefrom with greater accuracy the orientation along which the vehicle is moving. The latter orientation is then used to determine position coordinates of the vehicle. In this known navigation device a gyro compass is used to determine the first orientation signal and the second orientation signal is derived from velocities measured by means of the Doppler effect. The known navigation device uses a computer which processes samples of the presented signals and weights the presented signals on the basis of their error margins.

A disadvantage of the known navigation device is that it is not very suitable for use in land vehicles such as for example, motorcars or trucks. In fact the costprice of a gyro compass and of a velocity measuring unit based on the Doppler effect are high as compared with that of the land vehicle.

It is an object of the invention to realise a navigation device for land vehicles which operates with simpler and cheaper means and moreover supplies a reliable value for the orientation.

For that purpose a navigation system according to the invention is characterized in that the digital unit is incorporated in a land vehicle navigation device and includes a filter unit, which comprises a first low-pass filter for filtering first orientation signals formed by the compass, which is an electronic compass, and comprises a high-pass filter for filtering the second orientation signals, which digital unit comprises a control unit which is suitable to generate a first filter parameter from the received orientation signals and supplies said first filter parameter as a control signal to the first low-pass filter and the high-pass filter to control the filter characteristics thereof, which output unit is fed by the first low-pass filter and the high-pass filter to generate from the received filtered orientation signals a weighted vehicle orientation signal which indicates the orientation of the vehicle. An electric compass, as opposed to a gyrocompass, is a nonmechanical compass (a compass wherein the generated orientation signal is not dependent on moving mechanical parts), for example a glass fibre gyroscope, described in Proceedings of the Society of Photo-Optical Instrumentation Engineers, Vol. 77, March 22—23, 1976, pages 110—115, by V. Vali and R. Shorthill: "Fiber laser gyroscopes". An electronic compass is much cheaper than a gyrocompass and provides values for the first orientation signal which are suitable for use in a land vehicle. Since the measured orientation is sensitive to disturbance peaks the first low-pass filter provides a solution to suppress said disturbance peaks. The second orientation signal on the contrary is sensitive to shift of the direct current component and this is suppressed by the high-pass filter. The control unit determines the filter parameter to control the filter characteristic. As a result of this a navigation device is thus realised which determines with simple means a reliable value for the heading.

In the United States Patent No. 4,106,094 a strap-down attitude and heading reference system is described wherein outputs of accelerometers that are attached to the vehicle are used to generate estimators of a vehicle's position and heading. The system is much more complex than the navigation device according to the invention, and less accurate because of the integration technique involved. In the United States Patent No. 3,844,051 a heading indicator, especially for land vehicles is described wherein a mechanical rate gyro is used to calculate the heading of a vehicle.

A first preferred embodiment of a navigation device according to the invention is characterized in that the control unit comprises a first module which is suitable to generate a first disturbance value by determining the high frequency components from the first orientation signal and which control unit comprises a second module which is suitable to generate a second disturbance value by determining the low frequency components from the second orientation signal, which control unit comprises a third module to determine the said first filter parameter from received first and second disturbance values. The generation of the high frequency components with the first orientation signal provides a good indication of the presence of disturbance peaks in the first orientation signal. The generation of the low frequency components from the second orientation signal gives a good indication of the shift in the direct voltage level in said signal.

A second preferred embodiment of a navigation device according to the invention is characterized in that the control unit comprises

a) a first calculating module to determine the high frequency components from the first orientation signal;

b) a first differentiator to generate a first difference signal by determining the difference from each time successive samples of the said high frequency components from the first orientation signal;

c) a second differentiator which receives the second orientation signals filtered by the high-pass filter and which is suitable to generate a second difference signal by determining the difference from each time successive samples of the filtered second orientation signal;

2

d) a second calculating module for determining a first disturbance signal on the basis of the first ar the second difference signals;

e) a third calculating module to determine the low frequency components from the first and secor orientation signals and a second disturbance signal on the basis thereof;

f) a fourth calculating module to determine the said first filter parameter from received first and secor disturbance signals. By using differentiators the first disturbance signal can be determined with a great accuracy, since the good information hidden in the errors is thus recognized.

It is favourable for the first calculating module to comprise a first sub-module to determine the sa high frequency components on the basis of the difference between the first orientation signal and th filtered first orientation signal. In this manner the first low-pass filter may also be used to determine th high frequency components and one filter is saved.

It is favourable for the first and second differentiators to each time determine the difference signal fro the difference of two successive samples of received signals. The drift of the direct voltage level betwee two successive samples is small and thus the effect thereof on the first difference signal is also small.

The invention will now be described in greater detail with reference to the drawing, in which

Fig. 1 shows an embodiment of a part of a navigation device according to the invention;

Fig. 2 shows an example of a more detailed construction of a filter unit according to the invention;

Fig. 3 shows a simplified current diagram to determine an optimum value of the heading;

Fig. 4 shows a further embodiment of a filter unit according to the invention;

Fig. 5 shows the behaviour of a simulated disturbance;

Fig. 6 shows the behaviour of the first disturbance signal without using the differentiators;

Fig. 7 shows the behaviour of the first disturbance signal with the use of the differentiators;

Fig. 8 (a and b) show a current diagram for determining the values $\varphi_{A,E}$ and $\varphi_{R,E}$.

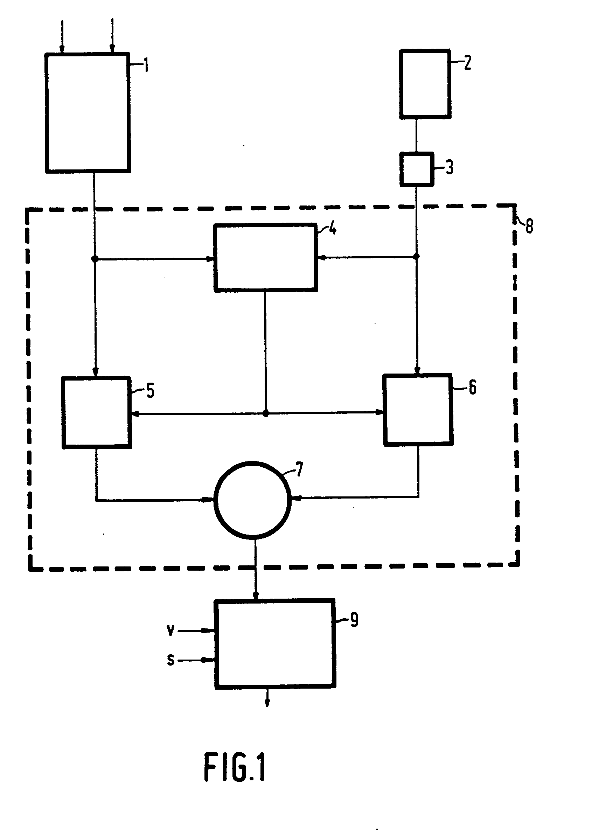

Fig. 1 shows an example of a part from a vehicle navigation device for a vehicle constructed for movin over roads on land. The vehicle navigation device comprises a filter unit 8 which is suitable for determinin a weighted value for the heading which indicates the direction (for example with respect to the north) alon which the vehicle is moving. Since the characterising properties of a vehicle navigation system accordin to the invention substantially reside in the filter unit 8, the description of the invention will be main directed to the description of the operation of said filter unit. An example of the operation of a complet vehicle navigation device is described, for example, in the article "EVA-Ortungs- und Navigationssyster für Landfahrzeuge" by E. P. Neukircher, O. Pilsak und D. Schlögl in Nachrichtenzeitschrift Band 36, (198: Heft 4 pages 214—218.

The device shown in fig. 1 comprises a unit 1 for determining variations in the orientation of the vehicl

$$\frac{d\varphi}{dt}.$$

In this embodiment this variation is determined on the basis of orientation data recorded, for example, b wheel sensors which are provided on a set of wheels belonging to the same shaft of the vehicle. It : described in the above article how these variations of the orientation of the vehicle and therefrom a orientation signal or heading ($\varphi_R$) is determined by means of wheel sensors. The measured valu however, is inaccurate and this inaccuracy manifests itself as a drift component for which purpose th electronics necessary for determining the measured value also provide a contribution. A means to remov said drift component is the high-pass filter 5 (HPF). In fact, when drift occurs, the low frequenc components are unreliable. An HPF filters said low frequency components from the signal. In the filter un shown in fig. 1 the orientation signal of the heading $\varphi_R$ as determined by the angle measuring unit 1 i therefore presented to an HPF 5.

Another method of determining the orientation of the vehicle uses an electronic compass. A orientation signal measured by the electronic compass will be indicated as a heading $\varphi_A$. The operation c an electronic compass is described, for example, in the article "Electronic Compass using a fluxgat sensor", by N. Pollock published in Wireless World October, 1982, pages 49—54. In the navigation devic shown in fig. 1 the element 2 is an electronic compass. The analogous value of $\varphi_A$ measured by th compass is converted by the A/D converter 3 into a digital signal which is presented to a low-pass filte (LPF) 6. In fact the signal originating from such an electronic compass comprises disturbance peaks whic manifest themselves as the rapid variation of the signal as a function of the covered path and are formed a a result of local disturbances on the measured earth's magnetic field, for example, as a result of th presence along the path of steel bridges or fencings. The disturbance peaks manifest themselves as a hig frequency component which can be filtered-out by means of a low-pass filter.

The filter unit 8 shown in fig. 1 furthermore comprises a control unit 4 to which both the headings $\varphi$ and $\varphi_A$ are presented. From these headings the control unit determines a filter parameter (L1) which gives measure of the reliability of the two signals $\varphi_R$ and $\varphi_A$. Errors in $\varphi_R$ result from disturbances which occur a a result of, for example, unequal tire pressure and/or wear, also of slip, if any, while the error in $\varphi_A$ i determined substantially by the presence of disturbance peaks and the accuracy of the electronic compass The control unit will be described in greater detail hereinafter. The filter parameter L1 determined by th

EP 0 218 273 B1

control unit 4 is presented to the HPF 5 and the LPF 6. Outputs of the HPF and LPF, respectively, of an adder unit 7 in which the output signals of the HPF and LPF are added and the result, a weighted value for the heading $\varphi_{opt}$, is supplied to an input of a dead reckoning data processing system 9. Said data processing system furthermore receives the measured velocity $v$, the covered path $s$ and the heading data and determines from these received data the coordinates $(x, y, z)$ indicating the position of the vehicle.

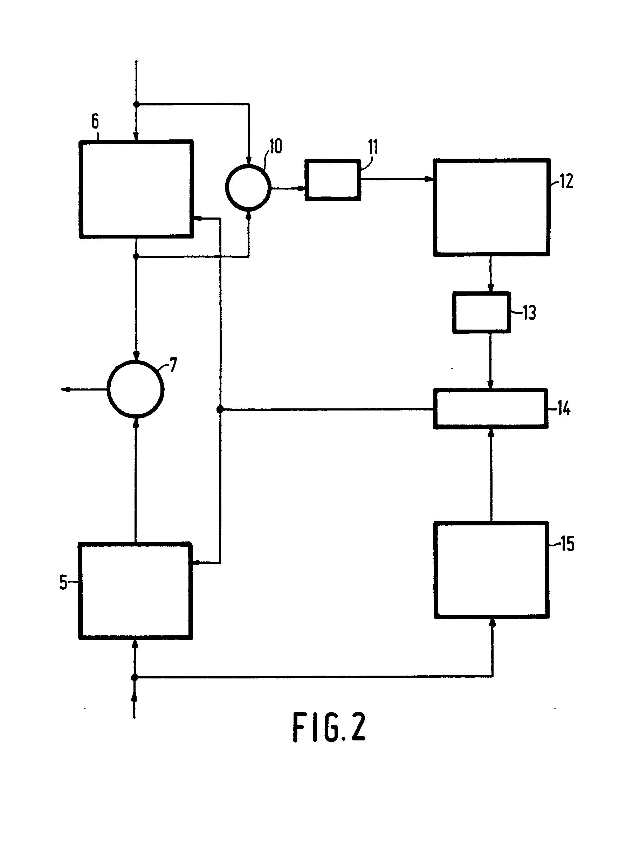

Fig. 2 shows a more detailed construction of a filter unit to be used in a vehicle navigation system according to the invention. Elements corresponding to those of fig. 1 are referred by the same reference numerals, for example, 5 is an HPF, 6 an LPF, and 7 an adder unit. The filter unit furthermore comprises a first calculating unit 10 to a first input of which the heading $\varphi_A$ is presented and a second input of which is connected to an output of the LPF. An output of the first calculating unit 10 is connected to an input of a squaring module 11. An output of the squaring module 11 is connected to an input of a second LPF an output of which is connected to a square root module 13. The signal determined by the square root module is presented to a first input of a second calculating unit 14.

The heading $\varphi_R$ is presented to an input of a third LPF 15, an output of which is connected to a second input of the second calculating unit 14. An output of the second calculating unit 14 is connected to a control input of the LPF 6 and a control input of the HPF 5.

The signals for the headings $\varphi_R$ and $\varphi_A$ are sampled. Between two successive samplings the vehicle has covered a previously determined fixed distance $\delta_n = s_n - s_{n-1}$ (1) $(n\varepsilon N)$. It is also possible, however, to sample at fixed points of time, $(t_n = n\bar{i}_s)$ (2), wherein $\bar{i}_s$ is a time constant.

Since there is sampled, only discrete values $s_n$, $\varphi_{A,n}$ and $\varphi_{R,n}$ are determined for the distances and headings, respectively. $\varphi_{A,n}$ and $\varphi_{R,n}$ are the headings as sampled after covering a distance $n\delta_n$ or at a point of time $t_n = n\bar{i}_s$. These values are valid in the s-domain. s-domain is to be understood to mean a reference system in which the abscis represents a distance value, for example in metres, and the ordinate represents an angular value, for example, in radians. For processing these values it is necessary to perform a transformation of the s-domain to the Z-domain.

The Z-transformation for this function f is then given by

$$\mathcal{Z}(f_n) = \sum_{n=0}^{\alpha} f_n z^{-n} \tag{3}.$$

Further information on Z-transformations are given for example, in the book "Control System Theory" by O. I. Elgerd; Mac Graw Hill Book Company, New York 1967, *p.* 384, paragraph 9.4.4.

In the Z-domain is now defined:

$$\Phi_A = \mathcal{Z}(\varphi_{A,n})$$
$$\Phi_R = \mathcal{Z}(\varphi_{R,n})$$

Defined in the Z-domain the transformation function reads of:

a) an LPF

$$\frac{1}{1 + \frac{L_a}{\delta_n}(z-1)} \tag{4}$$

b) an HPF

$$\frac{\frac{L_a}{\delta_n}(z-1)}{1 + \frac{L_a}{\delta_n}(z-1)} \tag{5}$$

4

For the filtering device as shown in fig. 2, $\delta_n$ has the meaning as given in expression (1) and the value is, for example $\delta_n = 5m$. For the first LPF (6) and for the HPF, $L_a = L_1$ is a filter parameter. An initial value for this filter parameter is, for example, $L_1 = 50m$, the distance covered between two successive corrections the dead-reckoning data processing system.

For the second LPF (12), for example, $L_a = L_2 = 500m$, a value chosen in accordance with the magnetic properties of the surroundings. For the third LPF (15), for example, $L_a = L_3 = 100m$, a value derived from the extent of disturbance as a result of wheel drift.

When in a place $n\delta_n$, $\varphi_{A,n}$ is sampled, the value $\varphi_A$ is presented to the first input of the first calculating unit 10. The filtered value of $\varphi_A$ as determined by the first LPF presented to a second input of the first calculating unit. The first calculating unit determines the difference between the values presented to the inputs. This difference now gives the high frequency components of the orientation signal $\varphi_A$. In fact, when the low frequency components (at the output of LPF (6) are subtracted from the signal $\varphi_A$, the high frequency components are obtained. Expressed in the Z-domain this provides

$$\Phi_{A,H,L_1} = \Phi_A - \Phi_A \left[ \frac{1}{1 + \frac{L_1}{\delta_n}(z-1)} \right] \tag{6}$$

Since, however, an LPF is used, the signal presented to the output of LPF 6 is in fact equal to the average value $(\overline{\varphi_A})$ of $\varphi_A$. So in the expression (6) there is the difference between a measured value and the average value. This difference is used to determine the mean error S which is determined by

$$S^2 = \frac{1}{N} \sum_{i=1}^{N} (\varphi_A - \overline{\varphi_A})^2 \tag{7}$$

wherein N represents the number of measuring points. In the filter unit according to the invention the mean error is used to determine the weight factor with which the measured heading $\varphi_A$ should be weighted. Said mean error in fact gives an effective value (RMS) of the disturbance on the measured signal.

For the determining the average error it is necessary as appears from expression (7) to determine the square of $(\varphi_A - \overline{\varphi_A})$. For this purpose the squaring module 11 is used. The following operation considered in the Z-domain was carried out by the first calculating unit 10.

$$\Phi_{A,H,L_1} = \Phi_A - \Phi_A \left[ \frac{1}{1 + \frac{L_1}{\delta_n}(z-1)} \right]$$

$$\Phi_{A,H,L_1} \cdot \left(1 + \frac{L_1}{\delta_n}(z-1)\right) = \Phi_A \left(\frac{L_1}{\delta_n}(z-1)\right)$$

$$\Phi_{A,H,L_1} \cdot \left(\frac{\delta_n}{L_1} + z - 1\right) = \Phi_A (z-1) \tag{8}$$

Now it applies that

$$\mathcal{Z}\{f_{v+1}\} = z\,\mathcal{Z}\{f_v\} - z\,f_0 \tag{9}$$

The use of expression (9) in expression (8) now provides

$$\mathcal{Z}(\varphi_{n+1}) = z\,\mathcal{Z}(\varphi_n) - z\,\varphi_0$$

Since now $\varphi_0 = 0$ (initial position)

$$\mathcal{Z}(\varphi_{n+1}) = z\,\mathcal{Z}(\varphi_n)$$

Expression (8), after back-transformation hence becomes

$$\varphi_{A,H,L_1,}(n)\,\frac{\delta_n}{L_1} + \varphi_{A,H,L_1,}(n+1) - \varphi_{A,H,L_1,}(n)$$

$$\varphi_{A,n+1} - \varphi_{A,n}$$

wherein $\varphi_{A,H,L_1}$ represents the signal at the output of the filter

$$\varphi_{A,H,L_1,}(n+1) =$$

$$\varphi_{A,H,L_1,}(n)\,(1 - \frac{\delta_n}{L_1}) + \varphi_{A,n+1} - \varphi_{A,n} \tag{10}$$

The squaring of said expression for $\varphi_{n+1}$ is now carried out by the squaring unit 11:

$$q_{n+1} = [\varphi_{A,H,L_1,}(n+1)]^2$$

$$q_{n+1} = [\varphi_n\,(1 - \frac{\delta_n}{L_1}) + \varphi_{A,n+1} - \varphi_{A,n}]^2$$

Since the mean error is given by

$$S^2 = \frac{1}{N}\sum_{i=1}^{N}(\varphi_A - \overline{\varphi}_A)^2 \tag{7}$$

this can be determined from the average of the square, i.e.

$$S^2 = (\varphi_A - \overline{\varphi}_A)^2$$

In order to determine $S^2$ use is made of a second LPF (12), for an LPF determines the average of the signal presented to its input. Considered in the Z-domain, the following operation is now carried out by LPF.

$$H = Q\,(\frac{1}{1 + \frac{L_2}{\delta_n}\,(z-1)}) \tag{12}$$

$$H\,((\frac{\delta_n}{L_2}) + (z-1)) = Q\,\frac{\delta_n}{L_2}$$

After inverse Z-transformation

$$h_n \frac{\delta_n}{L_2} + h_{n+1} - h_n = q_n \frac{\delta_n}{L_2}$$

$$h_{n+1} = h_n (1 - \frac{\delta_n}{L_2}) + q_n \frac{\delta_n}{L_2} \tag{13}$$

The signal $h_{n+1}$ presented to the output of the second LPF (12) is presented to the square root modul 13. The signal at an output of the square root module is:

$$k_{n+1} = \sqrt{h_{n+1}} \tag{14}$$

This value $k_{n+1}$ then gives the effective value of the disturbance on the meaured heading $\varphi_A$ and forms a first disturbance value.

The determination of the extent to which the drift component influences the accuracy of the heading $\varphi_i$ is done by presenting $\varphi_R$ to the input of an LPF. In fact when the drift component is large, the low frequency values will be considerable and a high value will be presented to the output of the LPF. The larger the absolute value at the output of the LPF, the more unreliable is the signal $\varphi_R$. For the above-mentioned reasons the signal $\varphi_R$ in a filter unit according to the invention is presented to LPF 15, which LPF performs the following operation, considered in the Z-domain, to determine the second disturbance value.

$$\Phi_{R,L,L_3} = \Phi_R \left( \frac{1}{1 + \frac{L_3}{\delta_n}(z-1)} \right)$$

$$\Phi_{R,L,L_3} \left( \frac{\delta_n}{L_3} + z - 1 \right) = \Phi_R \frac{\delta_n}{L_3}$$

After inverse Z-transformation

$$\varphi_{R,L,L_3,(n)} \frac{\delta_n}{L_3} + \varphi_{R,L,L_3,(n+1)} - \varphi_{R,L,L_3,n} = \varphi_{R,n} \frac{\delta_n}{L_3}$$

$$\varphi_{R,L,L_3,(n+1)} = \varphi_{R,L,L_3,(n)} (1 - \frac{\delta_n}{L_3}) + \frac{\delta_n}{L_3} \varphi_{R,n} \tag{15}$$

7

The second calculating unit 14 now determines the signal

$$L_1 = L_0 + \alpha k_{n+1} + \beta \varphi_{R,L,L_3,(n+1)} \tag{16}$$

Herein $L_0$ are a constant (for example $L_0 = 50$ m) and $\alpha$ and $\beta$ are weight factors determined by the quality of the sensors with which $\varphi_A$ and $\varphi_R$, respectively, have been recorded. Since a high value at the output of LPF means a great inaccurracy, a negative value is selected for $\beta$. The value $L_1$ determined by the second calculating unit is then applied to LPF 6 and HPF 5. As a result of this the possibility arises to vary the weight factor $L_1$ for LPF 6 and HPF 5. The signals at the output of LPF 6 and HPF 5 thus are weighted signals and they are added by adder 7 and thus they constitute a signal $\varphi_{opt}$ at the output of adder 7 which gives an optimum value for the orientation of the vehicle. The filter unit 6 presents the possibility of determining an optimum signal from two signals affected with an inaccuracy in which, dependent on the reliability, weighting factors are determined in order to let the most reliable signal weigh heavier.

The following operation considered in the Z-domain is carried out by adder 7.

$$\Phi_{opt} = \frac{\Phi_A}{1 + \frac{L_1}{\delta_n}(z-1)} + \frac{\frac{L_1}{\delta_n}\Phi_R \ (z-1)}{1 + \frac{L_1}{\delta_n}(z-1)}$$

$$\Phi_{opt} \left(1 + \frac{L_1}{\delta n}(z-1)\right) = \Phi_A + \frac{L_1}{\delta n}\Phi_R(z-1)$$

$$\Phi_{opt} \left(\frac{\delta_n}{L_1} + z-1\right) = \Phi_A \frac{\delta_n}{L_1} + \Phi_R(z-1)$$

After inverse Z-transformation:

$$\varphi_{opt,n} \left(\frac{\delta_n}{L_1} - 1\right) + \varphi_{opt,n+1} =$$

$$\varphi_{R,n} + \frac{\delta_n}{L_1} \varphi_{A,n}$$

$$\text{wherein } \Delta\varphi_{R,n} = \varphi_{R,n+1} - \varphi_{R,n}$$

$$\varphi_{opt,n+1} =$$

$$\varphi_{opt,n} \left(1 - \frac{\delta_n}{L_1}\right) + \varphi_{R,n} + \frac{\delta_n}{L_1} \varphi_{A,n} \tag{17}$$

The value of $\varphi_{opt}$ is now used, for example in the vehicle navigation system to generate the vehicle position coordinates

$$X_{n+1} = X_n + \delta_n\cos\tfrac{1}{2} (\varphi_{opt,n+1} + \varphi_{opt,n})$$

$$Y_{n+1} = Y_n + \delta_n\sin\tfrac{1}{2} (\varphi_{opt,n+1} + \varphi_{opt,n})$$

The filter unit shown in figure 2 uses discrete components. An alternative implementation of a filter unit according to the invention uses a data processor unit, for example a microprocessor, to determine $\varphi_o$[

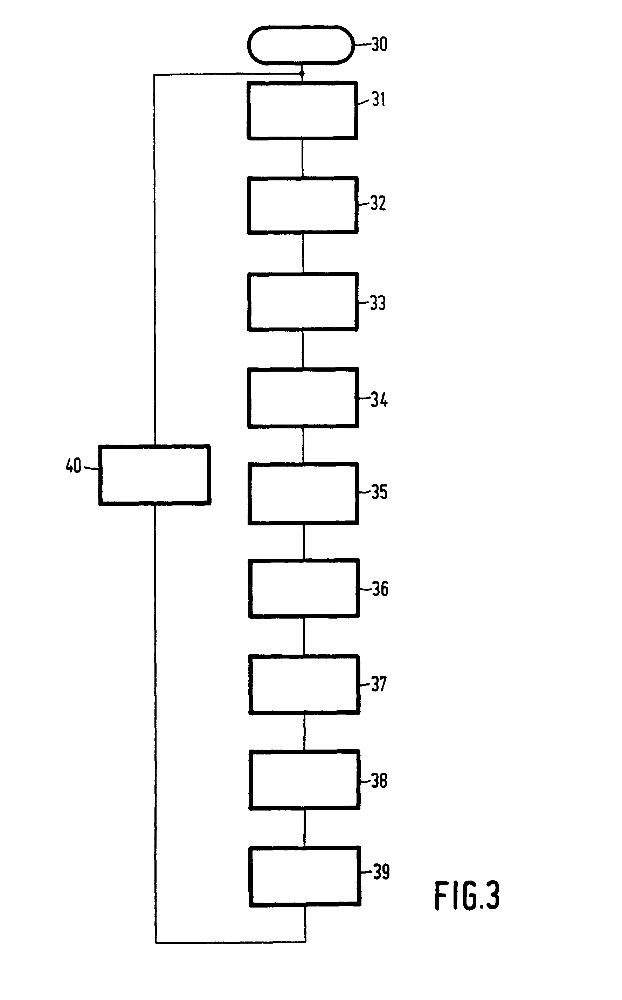

Figure 3 shows a simplified current diagram of the various steps which are carried out under th control of the data processor unit to determine the value of $\varphi_{opt}$. After starting (30), for example, by startir the navigation system, each time samples of $\varphi_{A,n}$, $\varphi_{R,n}$ and $S_n$ are measured after covering a distance $n.\delta$ are collected and stored in a first register (31). $\delta_n = S_{n+1} - S_n$ (32) is determined from the value of $S_{n+1}$ ar $S_n$ which are both stored in the first register ($S_n$ stored during a preceding traverse of the routine, or $S_n =$ in the initial position).

In steps 33 to 39 the values indicated hereinafter are determined and each stored in a respecti\ register:

step 33: $\varphi_{A,H,L_1,(n+1)}$ (expression 10)
step 34: $\varphi_{R,L,L_3,(n+1)}$ (expression 15)
step 35: $q_{n+1}$ (expression 11)
step 36: $h_{n+1}$ (expression 13)
step 37: $k_{n+1}$ (expression 14)
step 38: $L_1$ (expression 16)
step 39: $\varphi_{opt}$ (expression 17).

The value of $\varphi_{opt}$ is then presented to a data output of the data processor unit. A counter is the increased by one step and each time the successive data are erased from the register (40) in order to agai cover the routine from step 31 for a subsequent sampling.

In the filter unit as shown in figure 2 the weighting factor $L_1$ is determined on the basis of the headinc $\varphi_A$ and $\varphi_R$ by using LPF 6 in combination with calculating unit 10, as well as by using LPF 12 and LPF 1! The high frequency components for the headings $\varphi_A$ as determined by LPF 6 in combination wit calculating unit 10 comprise, in addition to disturbance, also good high frequency components. The lov pass filter 12, however, will now interpret the good high frequency components as disturbances so that th value of the weighting factor $L_1$ is distorted. The distortion may be removed by determining the weigh factor $L_1$ on the basis of increase or decrease in the successive sampling values for the headings $\varphi_A$ and $\varphi_F$

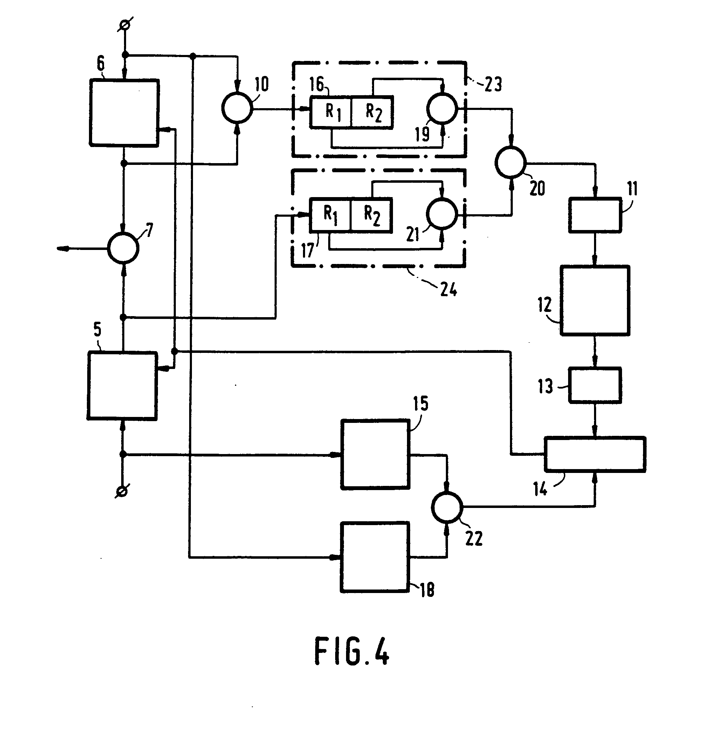

Figure 4 shows an example of a filtering unit in which the value of the weighting factor $L_1$ is determine on the basis of the increase or decrease in the successive sampling values for the headings $\varphi_A$ and $\varphi_l$ Elements corresponding to those shown in figure 2 have the same reference numerals in figure 4. In th figure 4 filter unit the output of the first calculating module 10 is connected to an input of a firs differentiator 23 whose output is connected to a first input of a third calculating unit 20. An output of th high-pass filter 5 is connected to an input of a second differentiator 24 whose output is connected to second input of the third calculating unit 20. An output of the third calculating unit is connected to an inpu of the squaring module 11.

The first and second differentiators (23, 24) are suitable to determine the difference between tw successively presented samplings ($P_n$, $P_{n+1}$; $P_{n+1} - P_n$). For this purpose, for example, the differentiator comprise shift registers (16, 17) and a subtracting unit (19, 21) connected thereto. Each shift registe comprises a first ($R_1$) and a second ($R_2$) sub-register. When a sample $P_{n+1}$ is presented to the shift registe the value $P_n$ stored in the sub-register $R_1$ is shifted to $R_2$ and the value $P_{n+1}$ is stored in $R_1$. After thi operation the values $P_{n+1}$ and $P_n$ are presented to the respective inputs of the subtracting units so as t determine the value $P_{n+1} - P_n$.

The sampled signals for the heading $\varphi_{R,H,L_1}$ after having passed the HPF 5 are presented to the secon differentiator 24. This second differentiator determines a second difference signal by performing th following operation:

$$\varphi_{R,H,L_1,(n+1)} - \varphi_{R,H,L_1,(n)} = \Delta\varphi_{R,H,L_1} \tag{18}$$

$$\Delta\varphi_{R,H,L_n} = \frac{\delta_n}{L_1} \varphi_{R,H,L_1}(n) + \varphi_{R,n+1} - \varphi_{R,n} \tag{19}$$

By determining the difference between successive samples, the disturbance introduced by the whee drift (in fact $\varphi_R$ was determined by means of wheel sensors) is substantially eliminated. The disturbanc introduced by the wheel drift is expressed in a shift of the direct voltage level of the measured values. B subtracting successive sampling values from each other, said shift in the direct voltage level is eliminated Preferably directly succeeding sampling values are subtracted from each other. In fact, when th successive samplings succeeds each other rapidly ($\delta_n = 5m$), the variation in the direct voltage leve between these two successive samples is minimum. For this purpose, only two sub-registers are necessar also for the register 17. It will be obvious, however, that alternative solutions are also possible, for example $\varphi_{R,H,L_1,(n+2)} - \varphi_{R,H,L_1,(n)}$ but these provide no improvement, quite the reverse.

Since the second difference signal $\Delta\varphi_{R,H,L_1}$ as determined by means of the second differentiator is use for the heading $\varphi_R$, it is also necessary in order to determine a feasible value for the filter parameter $L_1$ t

determine a first difference signal $\Delta\varphi_{A,H,L_1}$ for the heading $\varphi_A$. For this purpose, the filter unit comprises a first differentiator 23 which performs the following operation on the sampled signals for the heading $\varphi_{A,H,L_1}$

$$\varphi_{A,H,L_1,(n+1)} \ - \ \varphi_{A,H,L_1,(n)} \ = \ \Delta\varphi_{A,H,L_1} \qquad (20)$$

Substitution of (10) in (20) provides:

$$\Delta\varphi_{A,H,L_1} \ = \ \frac{\delta_n}{L_1} \ \varphi_{A,H,L_1,(n)} \ + \ \varphi_{A,n} \ - \ \varphi_{A,n} \qquad (21)$$

The difference signals $\Delta\varphi_{A,H,L_1}$ and $\Delta\varphi_{R,H,L_1}$ are presented to the third calculating unit 20 which then performs the following operation in order to determine a first disturbance signal $\varphi_{A,E}$.

$$\varphi_{A,E} \ = \ \Delta\varphi_{A,H,L_1} \ - \ \Delta\varphi_{R,H,L_1} \qquad (22)$$

Substitution of 21 and 19 in 22 provides:

$$\varphi_{A,E} \ = \ \frac{\delta_n}{L_1}(\varphi_{A,H,L_1,(n)} \ - \ \varphi_{R,H,L_1,(n)}) \ +$$

$$(\varphi_{A,n+1} \ - \ \varphi_{R,n+1}) \ + \ (\varphi_{R,n} \ - \ \varphi_{A,n}) \qquad (23)$$

The first disturbance signal $\varphi_{A,E}$ now gives information on the disturbance which is present on the measured value of $\varphi_A$. In fact the HPF 5 and the second differentiator 24 have removed the disturbances from the measured values for the heading $\varphi_R$ so that $\Delta\varphi_{R,H,L_1}$ may be considered as substantially disturbance-free, $\Delta\varphi_{R,H,L_1}$ thus is reliable value. Assuming that $\Delta\varphi_{A,H,L_1}$ is also substantially disturbance-free, the value $\varphi_{A,E}$ must be substantially equal to zero, for $\varphi_A$ and $\varphi_R$ of course represent the same heading. The deviation between $\varphi_A$ and $\varphi_R$ is given by the amount of disturbance on said samples. Since $\Delta\varphi_{R,H,L_1}$ is considered to be reliable, the amount which $\varphi_{A,E}$ differs from zero gives a degree for the error on the measured value for $\varphi_A$.

The detection of the wheel sensor drift present on the presented samples for the heading $\varphi_R$ is done by using the LPF's 15 and 18 and the calculating unit 22. The heading $\varphi_A$ comprises now low frequency disturbance component as a result of drift when a regression circle is used to eliminate said drift component in $\varphi_A$. The use of a regression circle is described, for example, in United States Patent Specification 4,414,753. By using such a regression circle the low frequency components of the heading $\varphi_A$ comprise reliable information. A disturbance in the heading $\varphi_R$ can now be detected by comparing the low frequency components of $\varphi_R$ and $\varphi_A$. For this purpose the fourth low-pass filter 18 is incorporated in the filter unit. The measured sampling value of the heading $\varphi_A$ is presented to an input of said fourth LPF. This fourth LPF operates with the same filter parameter $L_3$ as the third LPF 15. The outputs of the third and the fourth LPF's, respectively, are connected to respective inputs of a fourth calculating unit 22, whose output is connected to an input of the second calculating unit 14. That LPF 15 and LPF 18 operate with the same filter parameter $L_3$ is necessary in connection with the fact that the samples of both $\varphi_A$ and $\varphi_R$ should be filtered with the same filter parameter to determine the difference between the two filtered samplings by the fourth calculating unit 22. The calculating unit 22 performs the following operations, considered in the Z-domain, in order to determine a second disturbance signal

$$\varphi_{R,E} \ = \ [\Phi_R \ - \ \Phi_A][\frac{1}{1 + \frac{L_3}{\delta_n}(z-1)}] \qquad (24)$$

$$\varphi_{R,E} \ = \ (1 - \frac{\delta_n}{L_3})(\varphi_{R,L,L_3,n} \ - \ \varphi_{A,L,L_3,n}) \ +$$

$$\frac{\delta_n}{L_3}(\varphi_{R,n} \ - \ \varphi_{A,n}) \qquad (25)$$

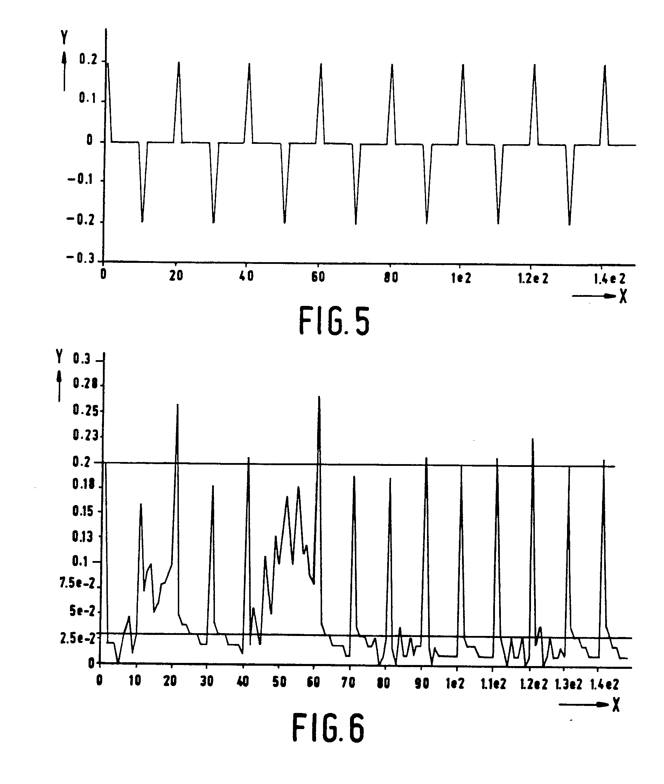

In order to illustrate the operation of a filter unit shown in figure 4 and notably to explain the advantage of the use of the differentiators 23 and 24 a disturbance on the heading $\varphi_A$ is simulated. The behaviour o said disturbance is shown in figure 5. The value (in radians) of the heading is shown on the Y-axis and covered path is shown on the X-axis.

Figure 6 shows a graph in which the covered path is again plotted on the X-axis and the value $\varphi'_{A,E} =$ $\varphi_{A,H,L_1} - \varphi_{R,H,L_1}$ on the Y-axis.

This value $\varphi_{A,E}$ is obtained by using the differentiators 23 and 24. This graph shows clearly that the disturbance provided on $\varphi_A$, mainly for small values of X, so in the initial stage is still recognized insufficiently by the filter unit.

This notably can be recognized by the irregular pattern of the graph mainly in the initial stage. In fact in said initial stage the value of the filter parameter $L_1$ is still too inaccurate so that the adjustment of the filter 5 and 6 is still insufficiently accurate and thus $\varphi_{R,H,L_1}$ and $\varphi_{A,H,L_1}$ still comprise disturbance contribution which are included in the determination of $\varphi'_{A,E}$.

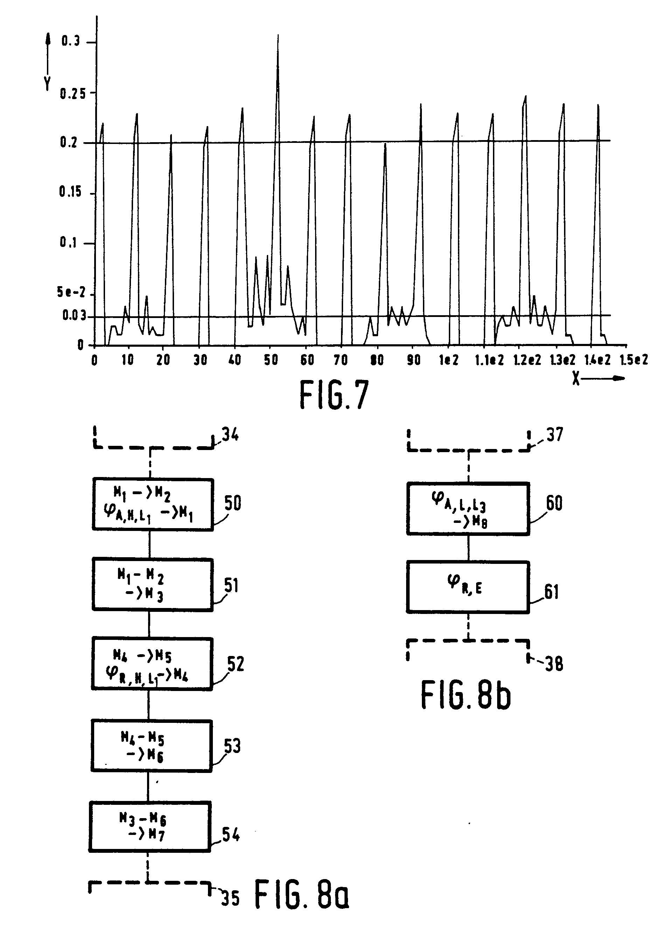

Figure 7 shows a graph in which the values $\varphi_{A,E}$ are plotted on the Y-axis. These values for $\varphi_{A,E}$ are obtained by using the differentiators 23 and 24. It will be obvious from said graph that the disturbance of $\varphi_A$ is recognized and the wheel drift contribution has been filtered out even in the initial stage when the filter parameter $L_1$ is still known insufficiently accurately. This graph thus illustrates the advantage of the use of the differentiators.

The values for $\varphi_{A,E}$ and $\varphi_{R,E}$ can also be determined by using a program which is destined for that purpose and which can be handled by means of a data processing unit. Figure 8 (a and b) shows an example of a current diagram for a program with which the values $\varphi_{A,E}$ and $\varphi_{R,E}$ can be determined. This program comprises two sub-routines, a first (figure 8a) for determining $\varphi_{A,E}$ which can be inserted between the steps 34 and 35 of the program shown in figure 3, and a second (Figure 8b) for determining $\varphi_{R,E}$ which can be inserted between the steps 37 and 38 of the program shown in figure 3. The following operations are carried out in the various steps of said sub-routines.

A) Figure 8a:

50 $M_1 \rightarrow M_2$
$\varphi_{A,H,L_1} \rightarrow M_1$

The new value determined by $\varphi_{A,H,L_1}$ (step 33) is stored in a register $M_1$ after the value present there was transferred to a register $M_2$.

51 $M_1 - M_2 \rightarrow M_3$

The difference between the values stored in the registers $M_1$ and $M_2$ is determined and stored in a register $M_3$ (expression 21).

52 $M_4 \rightarrow M_5$
$\varphi_{R,H,L_1} \rightarrow M_4$

The new value determined for $\varphi_{R,H,L_1}$ (step 34) is stored in a register $M_4$ after the value present there was transferred to a register $M_5$.

53 $M_4 - M_5 \rightarrow M_6$

The difference between the values stored in the registers $M_4$ and $M_5$ is determined and stored in a register $M_6$ (expression 19).

54 $M_3 - M_6 \rightarrow M_7$

The difference between the values stored in the registers $M_3$ and $M_6$ is determined and stored in a register $M_7$ (expression 23).

The value $\varphi_{A,E}$ is now stored in the register $M_7$.

B) Figure 8b:

60 $\varphi_{A,L,L_3} \rightarrow M_8$

The values $\varphi_{A,L,L_3}$ are determined. They are the low frequency components of the samples for the heading $\varphi_A$ (filter parameter $L_3$; LPF 18). The successive values $\varphi_{A,L,L_3}$ are each time stored in a register $M_8$.

61 $\varphi_{R,E}$

Expression 25 is calculated on the basis of the values stored in $M_8$ and the values determined in step 38.

**Claims**

1. Navigation device for a vehicle comprising a compass (2) for recording the orientation of the vehicle and suitable to form first orientation signal by regular sampling of the recorded orientation, a measuring unit (1) to determine the variations in the orientation of the vehicle and suitable to form second orientation signals from regularly recorded samples of the said variations of the orientation, a digital unit (9) which is suitable to process received first and second orientation signals and which comprises an output unit, characterized in that the digital unit, is incorporated in a land vehicle navigation device and includes a filter unit (8) which comprises a low-pass filter (6) for filtering first orientation signals formed by the compass, which is an electronic compass (2), and comprises a high-pass filter (5) for filtering the second orientation signals, which digital unit comprises a control unit (4) which is suitable to generate a first filter parameter (L1) from the received orientation signals and supplies said first filter parameter as a control signal to the low-pass filter (6) and the high-pass filter (5) to control the filter characteristics thereof, which output unit is fed by the low-pass filter (6) and the high-pass filter (5) to generate from the received filtered orientation signals a weighted vehicle orientation signal which indicates the orientation of the vehicle.

2. Navigation device as claimed in Claim 1, characterized in that the control unit comprises a first module which is suitable to generate a first disturbance value by determining the high frequency components from the first orientation signal and which control unit comprises a second module which is suitable to generate a second disturbance value by determining the low frequency components from the second orientation signal, which control unit comprises a third module to determine the said first filter parameter from received first and second disturbance values.

3. Navigation device as claimed in Claim 2, characterized in that the first module is suitable to determine the high frequency components from the first orientation signal on the basis of the difference between the first orientation signal and the first orientation signal filtered by the first low-pass filter and which third module comprises a first sub-module for squaring the first disturbance value, a second low-pass filter for filtering the squared first disturbance value in which the filter characteristic of the second low-pass filter is controlled by a second filter parameter, which third module furthermore comprises a square root module for determining the square root of the first disturbance value filtered by the second low-pass filter, which third module also comprises an adder unit for determining the first filter parameter by adding the value, weighted with a previously determined weight factor, presented by the square root module and the second disturbance value.

4. Navigation device as claimed in Claim 1, characterized in that the control unit comprises

a) a first calculating module for determining the high frequency components from the first orientation signal;

b) a first differentiator for generating a first difference signal by determining the difference from each time successive samples of the said high frequency components from the first orientation signal;

c) a second differentiator which receives the second orientation signals filtered by the high-pass filter and which is suitable for generating a second difference signal by determining the difference from each time successive samples of the filtered second orientation signal;

d) a second calculating module for determining a first disturbance signal on the basis of the first and the second difference signals;

e) a third calculating module for determining the low frequency components from the first and second orientation signals and a second disturbance signal on the basis thereof;

f) a fourth calculating module for determining the said first filter parameter from received first and second disturbance signals.

5. Navigation device as claimed in Claim 4, characterized in that the fourth calculating module comprises a squaring module for squaring the first disturbance signal, a second low-pass filter for filtering the squared first disturbance signal, in which the filter characteristic of the second low-pass filter can be controlled by a second filter parameter, which fourth calculating module comprises a square root module for determining the square root of the first control signal filtered by the second low-pass filter, which fourth calculating module comprises an adding unit for determining the first filter parameter by adding weighted values presented by the square root module and the second disturbance signal.

6. Navigation device as claimed in Claim 4 or 5, characterized in that the first calculating module comprises a first sub-module for determining the said high frequency components on the basis of the difference between the first orientation signal and the filtered first orientation signal.

7. Navigation device as claimed in any of the Claims 4, 5 or 6, characterized in that the first and second differentiators each time determine the difference signals from the difference of two successive samples of received signals.

8. Navigation device as claimed in any of the Claim 4, 5, 6 or 7, characterized in that the second calculating module determines the first disturbance signal by subtracting the first and second difference signals.

9. Navigation device as claimed in any of the Claims 4, 5, 6, 7 or 8, characterized in that the third calculating module comprises third and fourth low-pass filters for determining the low frequency components from the first and second orientation signals, in which the filter characteristic of the third and the fourth low-pass filters is controlled by a third filter parameter.

10. Navigation device as claimed in any of the preceding Claims, characterized in that the sampling fc the first and second orientation signals are carried out each time when the vehicle has covered predetermined distance.

**Patentansprüche**

1. Navigationsgerät für ein Fahrzeug mit einem Kompaß (2) zum Aufzeichnen der Orientierung de Fahrzeugs und geeignet zur Bildung erster Orientierungssignale durch regelmäßiges Abtasten de aufgezeichneten Orientierung, mit einer Meßeinheit (1) zur Bestimmung der Abweichungen in de Orientierung des Fahrzeugs und geeignet zur Bildung zweiter Orientierungssignale aus regelmäßi( aufgezeichneten Abtastungen der Abweichungen von der Orientierung, mit einer Digitaleinheit (9), die sic zur Verarbeitung der empfangenen ersten und zweiten Orientierungssignale eignet und ein· Ausgangseinheit enthält, dadurch gekennzeichnet, daß die Digitaleinheit in ein Fahrzeugnavigationsgerä aufgenommen ist und eine Filtereinheit (8) enthält, die ein Tiefpaßfilter (6) zum Filtern der vom Kompaf gebildeten ersten Orientierungssignale enthält, wobei dieser Kompaß ein elektronischer Kompaß (2) ist und ein Hochpaßfilter (5) zum Filtern der zweiten Orientierungssignale enthält, und die Digitaleinheit ein· Steuereinheit (4) enthält, die sich zum Erzeugen eines ersten Filterparameters (L1) aus den empfangene Orientierungssignalen eignet und den ersten Filterparameter als Steuersignal dem Tiefpaßfilter (6) un( dem Hochpaßfilter (5) zur Steuerung derer Filterkennzeichen zuleitet, wobei die Ausgangseinheit von den Tiefpaßfilter (6) und von dem Hochpaßfilter (5) zum Erzeugen eines gewogene Fahrzeugorientierungssignals aus den empfangenen filtrierten Orientierungssignalen gespeist wird.

2. Fahrzeugnavigationsgerät nach Anspruch 1, dadurch gekennzeichnet, daß die Steuereinheit eine ersten Modul enthält, der sich zum Erzeugen eines ersten Störwerts durch die Bestimmung de Hochfrequenzanteile aus dem ersten Orientierungssignal eignet, und einen zweiten Modul enthält, der sicl zum Erzeugen eines zweiten Störwerts durch die Bestimmung der Niederfrequenzanteile aus dem zweite Orientierungssignal eignet, wobei diese Steuereinheit einen dritten Modul zur Bestimmung des erste Filterparameters aus den empfangenen ersten und zweiten Störwerten enthält.

3. Navigationsgerät nach Anspruch 2, dadurch gekennzeichnet, daß der erste Modul sich zun Bestimmen der Hochfrequenzanteile aus dem ersten Orientierungssignal auf der Basis des Unterschied zwischen dem ersten Orientierungssignal und dem vom ersten Tiefpaßfilter gefilterten erste Orientierungssignal eignet, und der dritte Modul einen ersten Untermodul zur Quadrierung des erste Störwerts, ein zweites Tiefpaßfilter zum Filtern des quadrierten ersten Störwerts, in dem da Filterkennzeichen des zweiten Tiefpaßfilters von einem zweiten Filterparameter gesteuert wird, außerden einen Quadratwurzelmodul zum Bestimmen der Quadratwurzel des vom zweiten Tiefpaßfilter gefilterte ersten Störwerts, und weiter einen Addierer zur Bestimmung des ersten Filterparameters durch Addierun( des Wertes enthält, der mit einem vorgegebenen Gewichtungsfaktor gewogen ist, der vor Quadratwurzelmodul und vom zweiten Störwert dargestellt wird.

4. Navigationsgerät nach Anspruch 1, dadurch gekennzeichnet, daß die Steuereinheit

a) einen ersten Rechenmodul zum Bestimmen der Hochfrequenzanteile aus dem erste Orientierungssignal,

b) einen ersten Differenzierer zum Erzeugen eines ersten Differenzsignals durch Bestimmung de Unterschieds zwischen jeweils auffolgenden Abtastungen der Hochfrequenzanteile aus dem erste Orientierungssignal,

c) einen zweiten Differenzierer, der die zweiten vom Hochpaßfilter gefilterten Orientierungssignal empfängt und sich zum Erzeugen eines zweiten Differenzsignals durch die Bestimmung des Unterschied zwischen jedesmal auffolgenden Abtastungen des abgefilterten zweiten Orientierungssignals eignet,

d) einen zweiten Rechenmodul zur Bestimmung eines ersten Störsignals auf der Basis der ersten un zweiten Differenzsignale,

e) einen dritten Rechenmodul zur Bestimmung der Niederfrequenzanteile aus den ersten und zweite Orientierungssignalen und einem zweiten Störsignal auf dieser Basis,

f) einen vierten Rechenmodul zur Bestimmung des ersten Filterparameters aus den empfangene ersten und zweiten Störsignalen enthält.

5. Navigationsgerät nach Anspruch 4, dadurch gekennzeichnet, daß der vierte Rechenmodul eine Quadriermodul zum Quadrieren des ersten Störsignals, ein zweites Tiefpaßfilter zum Filtern de quadrierten ersten Störsignals enthält, in dem das Filterkennzeichen des zweiten Tiefpaßfilters von einer zweiten Filterparameter gesteuert werden kann, wobei der vierte Rechenmodul einen Quadratwurzelmodt zur Bestimmung der Quadratwurzel des ersten vom zweiten Tiefpaßfilter gefilterten Steuersignals un weiter einen Addierer zur Bestimmung des ersten Filterparameters durch Addierung gewogener Wert enthält, die vom Quadratwurzelmodul und vom zweiten Störsignal dargestellt werden.

6. Navigationsgerät nach Anspruch 4 oder 5, dadurch gekennzeichnet, daß der erste Rechenmodt einen ersten Untermodul zur Bestimmung der Hochfrequenzanteile auf der Basis des Unterschiec zwischen dem ersten Orientierungssignal und dem gefilterten ersten Orientierungssignal enthält.

7. Navigationsgerät nach einem der Ansprüche 4, 5 oder 6, dadurch gekennzeichnet, daß die erste und zweiten Differenzierer jeweils die Differenzsignale aus dem Unterschied zwischen zw( aufeinanderfolgenden Abtastungen empfangener Signale bestimmen.

# EP 0 218 273 B1

8. Navigationsgerät nach einem der Ansprüche 4, 5, 6 oder 7, dadurch gekennzeichnet, daß der zweite Rechenmodul durch Subtraktion der ersten und zweiten Differenzsignale das erste Störsignal bestimmt.

9. Navigationsgerät nach einem der Ansprüche 4, 5, 6, 7 oder 8, dadurch gekennzeichnet, daß der dritte Rechenmodul dritte und vierte Tiefpaßfilter zur Bestimmung der Niederfrequenzanteile aus den ersten und zweiten Orientierungssignale enthält, wobei das Filterkennzeichen der dritten und vierten Tiefpaßfilter von einem dritten Filterparameter gesteuert wird.

10. Navigationsgerät nach einem oder mehreren der vorangehenden Ansprüche, dadurch gekennzeichnet, daß die Abtastung für die ersten und zweiten Orientierungssignale jeweils durchgeführt wird, wenn das Fahrzeug eine vorgegebene Strecke zurückgelegt hat.

## Revendications

1. Dispositif de navigation pour un véhicule comprenant un compas (2) pour enregistrer l'orientation du véhicule et convenant pour former des premiers signaux d'orientation par un échantillonnage régulier de l'orientation enregistrée, une unité de mesure (1) pour déterminer les variations de l'orientation du véhicule et convenant pour former des seconds signaux d'orientation à partir d'échantillons régulièrement enregistrés desdites variations de l'orientation, une unité numérique (9) qui convient pour traiter les premiers et seconds signaux d'orientation reçus et qui comprend une unité de sortie, caractérisé en ce que l'unité numérique est incorporée dans un dispositif de navigation de véhicule terrestre et comprend une unité de filtrage (8) qui comporte un premier filtre passe-bas (6) pour filtrer les premiers signaux d'orientation formés par le compas, qui est un compas électronique (2), ainsi qu'un filtre passe-haut (5) pour filtrer les seconds signaux d'orientation, cette unité numérique comprenant une unité de commande (4) qui convient pour générer un premier paramètre de filtrage ($L_1$) à partir des signaux d'orientation reçus et fournit le premier paramètre de filtrage, en tant que signal de commande, au filtre passe-bas (6) et au filtre passe-haut (5) afin de régir leurs caractéristiques de filtrage, l'unité de sortie étant alimentée par le filtre passe-bas (6) et par le filtre passe-haut (5) afin de générer, à partir des signaux d'orientation filtrés reçus, un signal d'orientation de véhicule pondéré qui indique l'orientation du véhicule.

2. Dispositif de navigation suivant la revendication 1, caractérisé en ce que l'unité de commande comprend un premier module qui convient pour générer une première valeur de perturbation par détermination des composantes de haute fréquence à partir du premier signal d'orientation, un deuxième module qui convient pour générer une seconde valeur de perturbation par détermination des composantes de basse fréquence à partir du second signal d'orientation, et un troisième module pour déterminer le premier paramètre de filtrage à partir de la première et de la seconde valeur de perturbation reçues.

3. Dispositif de navigation suivant la revendication 2, caractérisé en ce que le premier module convient pour déterminer les composantes de haute fréquence à partir du premier signal d'orientation sur la base de la différence entre le premier signal d'orientation et le premier signal d'orientation filtré par le premier filtre passe-bas et le troisième module comprend un premier sous-module pour élever au carré la première valeur de perturbation, un deuxième filtre passe-bas pour filtrer la première valeur de perturbation élevée au carré, dans lequel la caractéristique de filtrage du second filtre passe-bas est régie par un second paramètre de filtrage, le troisième module comprenant, en outre, un module de racine carrée pour déterminer la racine carrée de la première valeur de perturbation filtrée par le second filtre passe-bas, le troisième module comprenant également une unité additionneuse pour déterminer le premier paramètre de filtrage par addition de la valeur, pondérée par un facteur de pondération déterminé précédemment, présentée par le module de racine carrée et de la seconde valeur de perturbation.

4. Dispositif de navigation suivant la revendication 1, caractérisé en que l'unité de commande comprend:

a) un premier module de calcul pour déterminer les composantes de haute fréquence à partir du premier signal d'orientation;

b) un premier différentiateur pour produire un premier signal de différence par détermination de la différence entre des échantillons chaque fois successifs des composantes de haute fréquence à partir du premier signal d'orientation;

c) un second différentiateur qui reçoit les seconds signaux d'orientation filtrés par le filtre passe-haut et qui convient pour produire un second signal de différence par détermination de la différence entre des échantillons chaque fois successifs du second signal d'orientation filtré;

d) un deuxième module de calcul pour déterminer un premier signal de perturbation sur la base du premier et du second signal de différence;

e) un troisième module de calcul pour déterminer les composantes de basse fréquence à partir du premier et du second signal d'orientation et un second signal de perturbation sur la base de celles-ci;

f) un quatrième module de calcul pour déterminer le premier paramètre de filtrage à partir du premier et du second signal de perturbation reçus.

5. Dispositif de navigation suivant la revendication 4, caractérisé en ce que le quatrième module de calcul comprend un module élévateur au carré pour élever au carré le premier signal de perturbation, un second filtre passe-bas pour filtrer le premier signal de perturbation élevé au carré, dans lequel la caractéristique de filtrage du second filtre passe-bas peut être régie par un second paramètre de filtrage, le quatrième module de calcul comprenant un module de racine carrée pour déterminer la racine carrée du

14

premier signal de commande filtré par le second filtre passe-bas, le quatrième module de calc comprenant une unité additionneuse pour déterminer le premier paramètre de filtrage par addition c valeurs pondérées présentées par le module de racine carrée et du second signal de perturbation.

6. Dispositif de navigation suivant la revendication 4 ou 5, caractérisé en ce que le premier module c calcul comprend un premier sous-module pour déterminer les composantes de haute fréquence sur la ba: de la différence entre le premier signal d'orientation et le premier signal d'orientation filtré.

7. Dispositif de navigation suivant l'une quelconque des revendications 4, 5 ou 6, caractérisé en qu le premier et le second différentiateur déterminent chaque fois les signaux de différence à partir de différence de deux échantillons successifs de signaux reçus.

8. Dispositif de navigation suivant l'une quelconque des revendications 4, 5, 6 ou 7, caractérisé en c que le deuxième module de calcul détermine le premier signal de perturbation par soustraction du premi et du second signal de différence.

9. Dispositif de navigation suivant l'une quelconque des revendications 4, 5, 6, 7 ou 8, caractérisé en c que le troisième module de calcul comprend un troisième et un quatrième filtre passe-bas pour détermin les composantes le basse fréquence à partir du premier et du second signal d'orientation, dans lequel caractéristique de filtrage du troisième et du quatrième filtre passe-bas est régie par un troisièm paramètre de filtrage.

10. Dispositif de navigation suivant l'une quelconque des revendications précédentes, caractérisé en c que l'échantillonnage pour le premier et le second signal d'orientation est effectué chaque fois que véhicule a parcouru une distance prédéterminée.

FIG.1

FIG.2

FIG.3

FIG.4

FIG.5

FIG.6

FIG.7

FIG. 8a

FIG. 8b